# EUROPÄISCHE PATENTANMELDUNG

(11) **EP 3 795 799 A1**
(43) Veröffentlichungstag der Anmeldung: **24.03.2021**
(21) Anmeldenummer: 19198652.0
(22) Anmeldetag: 20.09.2019
(51) Int. Cl.: F01D 5/04

(54) **TELLERFEDER FÜR EINEN ABGASTURBOLADER**

(71) Anmelder: BMTS Technology GmbH & Co. KG, 70376 Stuttgart (DE)
(72) Erfinder: KISSLING, Konrad, 70197 Stuttgart (DE); MARTENS, Anatolij, 73054 Eislingen (DE)
(74) Vertreter: BRP Renaud & Partner mbB Rechtsanwälte Patentanwälte Steuerberater

(57) **Zusammenfassung**

Die Erfindung betrifft eine Tellerfeder (1) für einen Abgasturbolader (20). Die Tellerfeder (1) umfasst einen sich um eine Mittellängsachse (M) und entlang einer Umfangsrichtung (U) der Tellerfeder (1) erstreckenden und eine Telleröffnung (3) einfassenden ringförmigen Grundkörper (2). An einem Innenumfang (5) des Grundkörpers (2) sind Vorspannelemente (10) zum Ausüben einer Vorspannkraft auf einen in die Telleröffnung (3) eingesteckten Befestigungsabschnitt (22) eines Abgasturboladers (20) ausgebildet.

## Beschreibung

Die Erfindung betrifft eine Tellerfeder für einen Abgasturbolader sowie einen Abgasturbolader für eine Brennkraftmaschine mit einer solchen Tellerfeder.

Zur axialen Vorspannung des Leitschaufelträgers einer variablen Turbinengeometrie (VTG) eines Abgasturboladers wird oftmals eine Tellerfeder verwendet, die üblicherweise auch als Hitzeschild dient, um den VTG-Rückraum gegenüber dem Turbinenraum des Abgasturboladers thermisch abzuschirmen.

Motorvibrationen können jedoch dazu führen, dass sich die axial vorgespannte Tellerfeder bzw. das Hitzeschild relativ zu Lagergehäuse und Leitschaufelträger des Abgasturboladers bewegt, was insbesondere an der Auflagefläche des Lagergehäuses wegen der dort vorhandenen höheren Flächenpressung und geringeren Materialgüten zu Abnutzungserscheinungen führen kann. Insbesondere bei Hochtemperaturanwendungen mit Abgastemperaturen im Bereich von 1000°C oder mehr, wie sie in aktuellen Benzinmotoren zu finden sind, kommt es aufgrund der Wärmeeinwirkung gegebenenfalls zu einer Relaxation der Tellerfeder bzw. des Hitzeschildes, was wiederum zu einer Bewegung der Tellerfeder bzw. des Hitzeschildes relativ zum Lagergehäuse oder dem Leitschaufelträger und somit zu Verschleiß an den Anlageflächen führen kann. Dies wiederum kann bei hinreichend hohem Verschleiß eine Reduktion der von der Tellerfeder erzeugten Federspannung bewirken.

Für die Montage am Lagergehäuse muss das Hitzeschild vor der Montage der Welle des Abgasturbolader am Lagergehäuse auf dieses gesteckt werden und darf daher beim Auswuchten der am Lagergehäuse montierten Welle - die VTG und das und Turbinengehäuse sind zu diesem Zeitpunkt noch nicht montiert - nicht vom Lagergehäuse fallen bzw. schief hängen und somit mit dem Turbinenrad in Kontakt kommen. Üblicherweise wird daher die Telleröffnung der Tellerfeder so bemessen, dass sie auf eine am Lagergehäuse vorgesehen Nase - im Folgenden auch als Befestigungsabschnitt bezeichnet -gesteckt und von dieser hinreichend gehalten wird, so dass das die als Hitzeschild wirkende Tellerfeder wie gewünscht nicht oder nur in geringem Maße verkippen kann ohne das die als Hitzeschild wirkende Tellerfeder beim Wuchtprozess mit dem sich drehenden Turbinenrad in Kontakt kommen kann.

Um einem Verlust von Vorspannung des Hitzeschildes bei hohen Temperaturen entgegenzuwirken, kann eine Funktionstrennung von Abschirmblech und Tellerfeder vorgenommen werden wie dies z.B. in der DE 10 2018 218 395 beschrieben wird.

Des Weiteren kann die Spannungsverteilung in der Tellerfeder durch Formgestaltung, wie in der DE10 2018 210 022 beschrieben, so optimiert werden, dass die Tellerfeder weniger anfällig gegenüber hohen Temperaturen ist.

Die DE 10 2012 208 044 A1 schlägt eine unrunde Form des Hitzeschildes, die ein Verdrehen des Hitzeschildes verhindert, vor.

Aus der US8 376 721 B2 ist ein Hitzeschutzblech bekannt, dass mit dem Lagergehäuse verstemmt wird, so dass eine Relativbewegung zum Lagergehäuse vermieden wird.

Die DE10 2015 219 656 A1 offenbart ein Hitzeschild, das in einem Bereich mittig zwischen dessen Außen- und Innenumfang über drei Anlageflächen zentriert wird.

Die DE 10 2015 220 113 A1 offenbart ein Hitzeschild, dass an seinem Innenumfang ein zum Lagergehäuse vorstehendes Außengewinde aufweist, mit dem das Hitzeschild in das Lagergehäuse eingeschraubt wird.

Die CN 204 402 584 U offenbart ein Hitzeschild, das mittels eines radial in das Lagergehäuse eingreifenden Befestigungsrings axial fixiert wird.

Die in der DE10 2012 208 044 A1 offenbarte unrunde Form ist unter produktionstechnischen Gesichtspunkten jedoch recht komplex, und somit teuer herzustellen. Zudem kann die Form ein abrutschen vom Lagergehäuse nicht erfolgreich verhindern.

Die aus der DE10 2018 210 022 bekannte, mehrfach geschwungene Tellerfeder ist sehr robust gegenüber hohen Temperaturen, weist aber den Nachteil auf, dass sie durch die immer kompaktere Bauweise von modernen Abgasturboladern von der am Lagergehäuse vorgesehenen Nase während des Montage- und Wuchtprozesses nur noch ungenügend gehalten werden kann, was zu Problemen beim Auswuchten des Laufzeugs führen kann, wenn sich das Hitzeschild während des Auswuchtprozesses von seiner Sollposition löst und das Turbinenrad berührt. Dies wirkt sich letztlich negativ auf die Wuchtgüte aus.

Die aus der DE10 2018 218 395 bekannte Lösung ist ebenfalls sehr robust gegenüber hohen Temperaturen, weist aber die gleichen Nachteile auf wie die DE10 2018 210 022. Zudem ist sie durch die Verwendung von zwei Bauteilen anstelle eines Bauteils deutlich teurer in der Herstellung.

Ein Verstemmen des Hitzeschutzbleches mit dem Lagergehäuse - wie aus der US 837 6721 B2 bekannt - ist unter Produktionsgesichtspunkten relativ aufwendig, da hier ein weiterer Produktionsschritt, insbesondere ein weiteres Werkzeug notwendig sind. Diese Konstruktion hat jedoch den Vorteil, dass ein Verrutschen des Hitzeschutzbleches bei Montage oder Betrieb ausgeschlossen werden kann.

Die Zentrierung des in der DE10 2015 219 656 offenbarten Hitzeschildes dient ausschließlich der Positionierung, nicht der Fixierung des Hitzeschildes, so dass sich dieses im Wuchtprozess weiterhin lösen kann. Hinsichtlich einer Klemmkraft, ist eine Position möglichst weit innen am günstigsten, da hier aufgrund des geringen Radius der Einfluss thermischer Expansion des Lagergehäuses am geringsten ausfällt.

Die Befestigung des Hitzeschildes über ein Gewinde ist fertigungstechnisch unnötig teuer, da vor der Montage zunächst Gewinde sowohl am Hitzeschutzblech, als auch am Lagergehäuse geschnitten werden müssen.

Auch die in CN204402584 U offenbarte Lösung mit dem Befestigungsring bedarf eines weiteren Bauteils, welches unnötige Kosten produziert und die Montage kompliziert.

Es ist daher eine Aufgabe der vorliegenden Erfindung, eine als Hitzeschild verwendbare Tellerfeder zu schaffen, welches auf möglichst einfache und somit kostengünstige Art und Weise am Lagergehäuse montiert werden kann, gleichzeitig aber hinreichend am Befestigungsabschnitt des Lagegehäuses eines Abgasturboladers gehalten wird, so dass es weder während des Montagevorgangs des Abgasturboladers noch im Betrieb des Abgasturboladers unter dem Einfluss hoher thermischer Lasten seine Soll-Position am Lagergehäuse verlässt.

Diese Aufgabe wird durch den Gegenstand der unabhängigen Patentansprüche gelöst. Bevorzugte Ausführungsformen sind Gegenstand der abhängigen Patentansprüche.

Grundidee der Erfindung ist demnach, eine als Hitzeschild in einem Abgasturbolader zu verwendende, ringförmige Tellerfeder am Innenumfang entlang der Umfangsrichtung mit radial nach innen abstehenden Fortsätzen zu versehen, die axial von einer Mittellängsachse der Tellerfeder weg umgebogen sind. Auf diese Weise werden Vorspannelemente geschaffen, mit denen die Tellerfeder auf einen am Lagergehäuse des Abgasturboladers vorgesehenen Befestigungsabschnitt geklemmt werden kann. Mittels der von den Vorspannelementen erzeugten Vorspannkraft kann die Tellerfeder auch unter Einwirkung von Vibrationen und thermischer Expansion, wie sie im Betrieb des Abgasturboladers in einem Kraftfahrzeug auftreten, stabil am Lagergehäuse gehalten werden.

Die optimale Anzahl an vorzusehenden Vorspannelementen ergibt sich aus der benötigten Federvorspannung, um die Tellerfeder auch unter thermischer Belastung hinreichend am Lagergehäuse zu fixieren und insbesondere radial zu zentrieren.

Eine erfindungsgemäße Tellerfeder für einen Abgasturbolader umfasst einen sich um eine Mittellängsachse und entlang einer Umfangsrichtung der Tellerfeder erstreckenden und eine Telleröffnung einfassenden ringförmigen Grundkörper. An einem Innenumfang des Grundkörpers sind Vorspannelemente zum Ausüben einer Vorspannkraft auf einen in die Telleröffnung eingesteckten/eingeschobenen Befestigungsabschnitt eines Abgasturboladers ausgebildet.

Gemäß einer bevorzugten Ausführungsform ist wenigstens ein Vorspannelement durch einen am Innenumfang des Grundkörpers radial nach innen abstehenden und von der Mittellängsachse weg umgebogenen Fortsatz gebildet. Dies bedeutet, dass der radiale Abstand des umgebogenen Fortsatzes zur Mittellängsachse gegenüber einem nicht-umgebogenen Fortsatz vergrößert ist. Bezüglich der Ausrichtung des Fortsatzes gegenüber der Mittellängsachse, welche sich entlang einer axialen Richtung erstreckt, wird der Fortsatz hingegen zur Mittellängsachse hin umgebogen, d.h. ein Zwischenwinkel zwischen dem umgebogenen Fortsatz und der Mittellängsachse ist gegenüber einem Zwischenwinkel zwischen dem nicht-umgebogenen Fortsatz und der Mittellängsachse reduziert. Eine derartige Realisierung der Vorspannelemente ist technisch einfach zu realisieren, so dass sich Kostenvorteile bei der Herstellung der erfindungsgemäßen Tellerfeder ergeben. Besonders bevorzugt sind daher alle Vorspannelemente der Tellerfeder wie voranstehend beschrieben ausgebildet.

Gemäß einer weiteren bevorzugten Ausführungsform ist das wenigstens eine Vorspannelement bzw. der wenigstens eine Fortsatz so ausgebildet bzw. umgebogen, dass die von ihm erzeugte Vorspannkraft in einer radialen Richtung der Tellerfeder wirkt, die sich orthogonal von der Mittellängsachse weg erstreckt. Auf diese Weise kann die Tellerfeder mechanisch besonders stabil am Lagergehäuse des Abgasturboladers fixiert werden. Zudem kann eine präzise radiale Zentrierung der Tellerfeder und somit des Hitzeschilds auf dem - typischerweise nasen- oder bolzenartig ausgebildeten Befestigungsabschnitt des Lagergehäuses - erzielt werden.

Gemäß einer vorteilhaften Weiterbildung ist wenigstens eine Ausnehmung als sich in der radialen Richtung der Tellerfeder erstreckender schlitzartiger Durchbruch ausgebildet. Ein solcher schlitzartiger Durchbruch kann durch einen einfachen Stanzvorgang erzeugt werden. Darüber hinaus besitzt der Durchbruch in Umfangsrichtung nur eine geringe Erstreckung, so dass entlang der Umfangsrichtung am Innenumfang Grundkörpers eine große Anzahl an Vorspannelementen realisiert werden kann.

Zweckmäßig erstreckt sich in einem Längsschnitt entlang der Mittellängsachse ein radial innerer Endabschnitt wenigstens eines Fortsatzes parallel zur Mittellängsachse. Somit ergibt sich ein hülsenförmiger Abschnitt der Tellerfeder, welcher innenumfangsseitig flächig auf dem Befestigungsabschnitt des Lagergehäuses zur Anlage gebracht werden kann. Somit wird die Stabilität der Befestigung verbessert.

Bevorzugt kann der Grundkörper als Blechformteil mit einer vorbestimmten Blechstärke ausgebildet sein. Ein solches Blechformteil ist besonders einfach bearbeitbar, insbesondere umformbar. Insbesondere ist es auf einfache Weise möglich, zur Ausbildung der Vorspannelemente die am Innenumfang nach innen abstehenden Fortsätze umzubiegen.

Besonders bevorzugt beträgt eine entlang der axialen Richtung gemessene Abschnittslänge des sich parallel zur Mittellängsachse erstreckenden, umgebogenen radial inneren Endabschnitts wenigstens zwei, vorzugsweise wenigstens drei, und höchstens zehn, höchst vorzugsweise höchstens fünf Blechstärken des als Blechformteil ausgebildeten Grundkörpers. Auf diese Weise wird sichergestellt, dass der Grundkörper auch im Bereich der Vorspannelemente bzw. Fortsätze die erforderliche mechanische Steifigkeit aufweist und die durch die Vorspannung erzeugte Flächenpressung gering gehalten werden kann.

Besonders bevorzugt geht der radial innere Endabschnitt - zur Ausbildung einer Anlagefläche für den Abgasturbolader - in dem Längsschnitt entlang der Mittellängsachse radial nach außen in einen Anlage-Abschnitt über, der sich senkrecht zur Mittellängsachse, also entlang der radialen Richtung, erstreckt. Auf diese Weise kann der Grundkörper der Tellerfeder axial mechanisch stabil und präzise am Lagergehäuse des Abgasturboladers fixiert werden.

Zweckmäßig können die Vorspannelemente bzw. die Fortsätze integral am Grundkörper ausgeformt sein. Diese Variante erweist sich als besonders einfach herzustellen und somit kostengünstig.

Bevorzugt kann der Grundkörper ohne Vorspannelemente rotationssymmetrisch zur Mittellängsachse ausgebildet sein. Auch diese Variante ist technisch besonders einfach zu realisieren und daher auch besonders kostengünstig.

Die Erfindung betrifft auch einen Abgasturbolader, insbesondere für eine Brennkraftmaschine. Der Abgasturbolader umfasst eine Turbine, die ein Turbinengehäuse und ein im Turbinengehäuse aufgenommenes Turbinenrad aufweist. Der Abgasturbolader umfasst ferner eine voranstehend vorgestellte, erfindungsgemäße Tellerfeder, so dass sich die vorangehend erläuterten Vorteile der Tellerfeder auf den erfindungsgemäßen Abgasturbolader übertragen. Außerdem umfasst der erfindungsgemäße Abgasturbolader ein Lagergehäuse, welches einen Befestigungsabschnitt aufweist, welcher die Telleröffnung durchgreift, so dass die Tellerfeder zur Ausbildung eines Hitzeschildes, welches im Betrieb des Abgasturboladers das Lagergehäuse gegen von der Turbine erzeugte Wärme abschirmt, am Lagergehäuse fixiert ist.

Gemäß einer bevorzugten Ausführungsform liegen die Vorspannelemente flächig am Befestigungsabschnitt des Lagergehäuses an. Auf diese Weise wird die Tellerfeder fast oder vollständig verkippungsfrei am Lagegehäuse fixiert. Besonders bevorzugt üben die am Grundkörpers ausgeformten Vorspannelemente auf den Befestigungsabschnitt des Lagergehäuses eine Vorspannkraft aus. Auf diese Weise wird die Tellerfeder stabil am Lagegehäuse fixiert.

Besonders bevorzugt wirkt die von den Vorspannelementen erzeugte und auf den Befestigungsabschnitt des Lagergehäuses ausgeübte Vorspannkraft im Wesentlichen in radialer Richtung der Tellerfeder. Auf diese Weise kann die von den Vorspannelementen erzielte Fixierwirkung maximiert werden.

Besonders bevorzugt liegt die Tellerfeder mit ihrem radial äußeren Endabschnitt des Grundkörpers axial an einem Leitschaufelträger des Abgasturboladers an, so dass die Tellerfeder den Leitschaufelträger axial zum Turbinengehäuse hin vorspannt. Auf diese Weise wird der Leitschaufelträger stabil am Turbinengehäuse fixiert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

### Es zeigen, jeweils schematisch,

- Fig. 1: ein Beispiel einer erfindungsgemäßen Tellerfeder 1 in einem Querschnitt senkrecht zur Mittellängsachse der Tellerfeder,
- Fig. 2: die Tellerfeder der Figur 1 in einem Längsschnitt entlang der Mittellängsachse,
- Fig. 3: eine Detaildarstellung der Tellerfeder der Figur 2 im Bereich eines Vorspannelements,
- Fig. 4: eine Weiterbildung der Tellerfeder der Figur 2 mit zusätzlichem Hitzeschild,
- Fig. 5: eine schematische Teildarstellung eines Abgasturboladers mit der am Lagergehäuse des Abgasturboladers montierten, erfindungsgemäßen Tellerfeder gemäß den Figuren 1 bis 3,
- Fig. 6: den Abgasturbolader gemäß Figur 5 mit der Tellerfeder gemäß Figur 4.

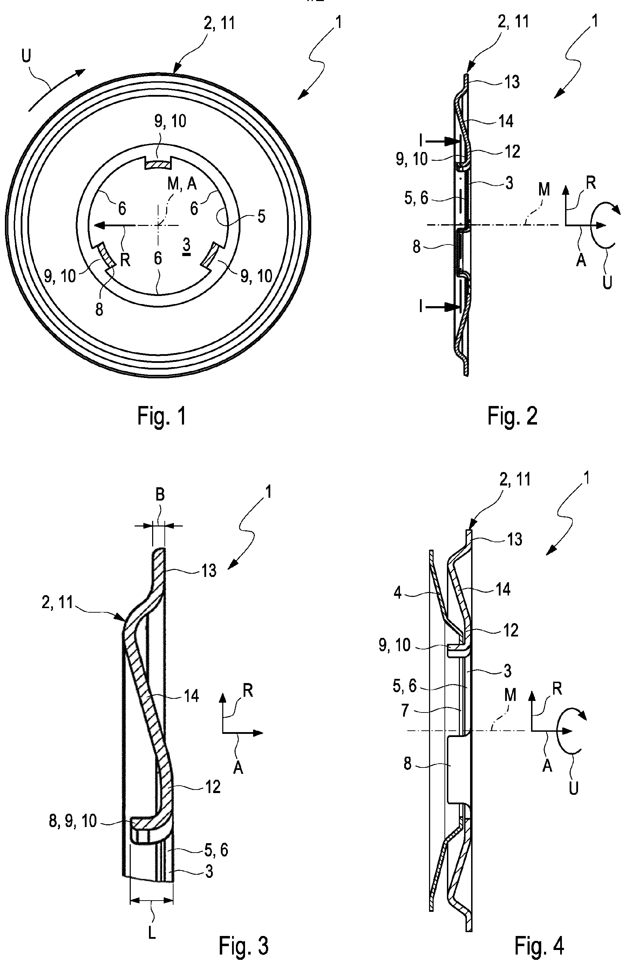

Die Figur 1 zeigt ein Beispiel einer erfindungsgemäßen Tellerfeder 1 in einem Querschnitt senkrecht zu einer Mittellängsachse M der Tellerfeder 1, die Figur 2 in einem Längsschnitt entlang dieser Mittellängsachse M. Figur 1 zeigt die Tellerfeder 1 dabei entlang der Schnittlinie I-I der Figur 2. Für die Verwendung als Hitzeschild besteht die Tellerfeder 1 üblicherweise aus hitzebeständigen Stählen, Nickel- oder Kobaltlegierungen, die auch oberhalb von einer Temperatur von 800°C noch deutlich über fünfzig Prozent ihrer Dehngrenze aufweisen.

Gemäß den Figuren 1 und 2 umfasst die Tellerfeder 1 einen ringförmigen Grundkörper 2. Der Grundkörper 2 erstreckt sich entlang einer Umfangsrichtung U der Tellerfeder 1 um die Mittellängsachse M, die sich wiederum entlang einer axialen Richtung A erstreckt. Die Umfangsrichtung U erstreckt sich senkrecht zur axialen Richtung A und läuft um die Mittellängsachse M um. Eine radiale Richtung R erstreckt sich orthogonal von der Mittellängsachse M weg und erstreckt sich außerdem senkrecht sowohl zur axialen Richtung A als auch zur Umfangsrichtung U.

Wie Figur 1 erkennen lässt, sind an einem Innenumfang 5 des ringförmigen Grundkörpers 2, der die Telleröffnung 3 einfasst und radial begrenzt, Vorspannelemente 10 zum Ausüben einer Vorspannkraft auf einen in die Telleröffnung 3 eingesteckten Befestigungsabschnitt (in Figur 1 nicht gezeigt) eines Abgasturboladers ausgebildet. Die Vorspannelemente 10 sind durch am Innenumfang 5 radial nach innen abstehende Fortsätze 9 gebildet.

Im Beispiel der Figur 1 sind exemplarisch drei Vorspannelemente 10 bzw. drei Fortsätze 9 gezeigt, die entlang der Umfangsrichtung U im Abstand zueinander angeordnet sind. In Varianten des Beispiels kann auch eine andere Anzahl an Vorspannelemente 10 bzw. Fortsätzen 9 vorgesehen sein. Die Vorspannelemente 10 bzw. die Fortsätze 9 sind integral am Grundkörper ausgeformt; die Vorspannelemente 10 bzw. die Fortsätze 9 und der Grundkörper 2 sind also einstückig und materialeinheitlich ausgebildet.

Wie Figur 1 veranschaulicht, ist der Grundkörper 2 ohne die Vorspannelemente 10 bzw. die Fortsätze 9 rotationssymmetrisch zur Mittellängsachse M ausgebildet.

In dem in Figur 1 gezeigten Querschnitt senkrecht zur Mittellängsachse M ist zwischen jeweils zwei in Umfangsrichtung U benachbarten Vorspannelementen 10 bzw. Fortsätzen 9 eine Ausnehmung 6 gebildet. Die Ausnehmungen können Bevorzugt als jeweils in radialer Richtung R der Tellerfeder 1 erstreckender schlitzartiger Durchbruch ausgebildet sein (nicht gezeigt).

Gemäß Figur 2 sind die Fortsätze 9 in dem Längsschnitt entlang der Mittellängsachse M von der Mittellängsachse M weg umgebogen. Somit können die Vorspannelemente 10 bzw. Fortsätze 9 jeweils eine Vorspannkraft erzeugen, die in der radialen Richtung R wirkt.

Gemäß den Figuren 2 und 3 - letztere ist eine Detaildarstellung der Figur 2 im Bereich des Innenumfangs 5 - erstreckt sich in dem Längsschnitt entlang der Mittellängsachse M ein radial innerer Endabschnitt 8 des jeweiligen Fortsatzes 9 parallel zur Mittellängsachse M.

Der Grundkörper 2 kann als Blechformteil 11 mit einer vorbestimmten Blechstärke B ausgebildet sein. Eine entlang der axialen Richtung A gemessene Abschnittslänge I des sich parallel zur Mittellängsachse M erstreckenden radial inneren Endabschnitts 8 beträgt wenigstens zwei Blechstärken B, vorzugsweise wenigstens drei Blechstärken B.

Wie Figur 3 außerdem veranschaulicht, geht in dem gezeigten Längsschnitt entlang der Mittellängsachse M der radial innere Endabschnitt 8 zur Ausbildung einer Anlagefläche für den Abgasturbolader - radial nach außen in einen AnlageAbschnitt über. Dieser Anlageabschnitt 12 erstreckt sich entlang der radialen Richtung R und somit senkrecht zur Mittellängsachse M. Der Anlageabschnitt 12 geht radial nach außen in einen Mittenabschnitt 14 über, der im Längsschnitt der Figur 2 unter einem spitzen Winkel zur Mittellängsachse M angeordnet sein kann. Der Mittenabschnitt 14 geht wiederum radial nach außen in einen radial äußeren Endabschnitt 13 über.

Besonders zweckmäßig sind Vorspannelemente 10 bzw. die umgebogenen Fortsätze 9 und die Ausnehmungen 6 bzgl. der Umfangsrichtung U äquidistant zueinander am Innenumfang 5 angeordnet, d.h. jeweils zwei entlang der Umfangsrichtung U benachbarte Ausnehmungen 6 und auch jeweils zwei entlang der Umfangsrichtung U benachbarte Fortsätze 9 sind in einem einheitlichen, also demselben, Abstand zueinander angeordnet.

Figur 4 zeigt eine Weiterbildung des Beispiels der Figur 3. Im Beispiel der Figur 4 umfasst die Tellerfeder 1 ein zusätzliches ringförmiges Hitzeschild 4, welches axial benachbart zum Grundkörper 2 der Tellerfeder 1 angeordnet ist und axial am Anlageabschnitt 12 der Tellerfeder 1 anliegt. Insbesondere kann der zusätzliche Hitzeschild 4 eine Hitzeschildöffnung 7 aufweisen, in welche der radial innere Endabschnitt 8 der Tellerfeder 1 eingesteckt ist. Auf diese Weise sind der Hitzeschild 4 und der Grundkörper 2 stabil aneinander fixiert. Der zusätzliche Hitzeschild 4 und der Grundkörper 2 sind also zweiteilig ausgebildet.

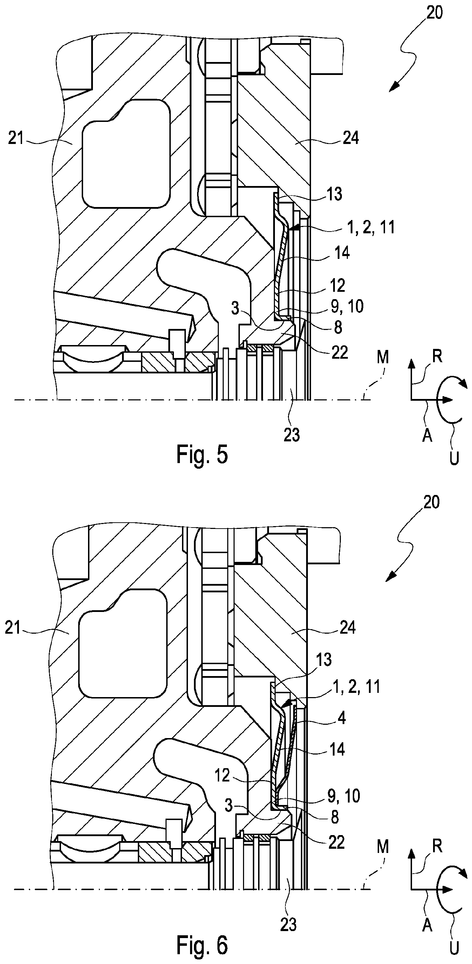

Figur 5 illustriert die Verwendung der vorangehend erläuterten Tellerfeder 1 gemäß den Figuren 1 bis 3 in einem Abgasturbolader 20 für eine Brennkraftmaschine. Der Abgasturbolader 20 umfasst eine Turbine, die ein Turbinengehäuse und ein im Turbinengehäuse aufgenommenes Turbinenrad (nicht gezeigt) aufweist. Ferner umfasst der Abgasturbolader 20 eine voranstehend erläuterte, erfindungsgemäße Tellerfeder 1. Der Abgasturbolader 20 umfasst auch ein Lagergehäuse 21, welches einen Befestigungsabschnitt 22 zum Befestigen der Tellerfeder 1 aufweist. In dem in Figur 4 gezeigten, im Abgasturbolader 20 montierten Zustand der Tellerfeder 1 durchgreift der - typischerweise bolzenartig ausgebildete - Befestigungsabschnitt 22 die Telleröffnung 3.

Die am Grundkörpers 2 ausgeformten Vorspannelemente 10 bzw. die umgebogenen Fortsätze 9 liegen flächig am Befestigungsabschnitt 22 des Lagergehäuses 21 an und üben auf den Befestigungsabschnitt 22 des Lagergehäuses 21 eine in radialer Richtung R wirkende Vorspannkraft aus. Auf diese Weise wird die Tellerfeder 1 am Befestigungsabschnitt 22 des Lagergehäuses 21 fixiert.

Gemäß Figur 5 ist die Tellerfeder 1 zwischen dem Turbinengehäuse und dem Lagergehäuse 21 angeordnet. Somit kann die Tellerfeder 1 als Hitzeschild wirken, welche das Lagergehäuse 21 und hinter dem Lagergehäuse 21 angeordnete Komponenten des Abgasturboladers 20 - hierzu gehören insbesondere Komponenten, die Teil des Verdichters (nicht gezeigt) des Abgasturboladers 20 sind, im Betrieb des Abgasturboladers 20 gegen in der Turbine erzeugte Wärme abschirmt.

Besonders bevorzugt liegt die Tellerfeder 1 wie in Figur 5 gezeigt mit dem radial äußeren Endabschnitt 13 des Grundkörpers 2 axial an einem Leitschaufelträger 24 des Abgasturboladers 20 an, so dass die Tellerfeder 1 den Leitschaufelträger 24 axial zum Turbinengehäuse vorspannt. Auf diese Weise wird der Leitschaufelträger 24 stabil am Turbinengehäuse fixiert.

Im Zuge der Montage des Abgasturboladers 20 wird zunächst die Tellerfeder 1 kraftschlüssig auf den am Lagergehäuse vorgesehenen, typischerweise nasenförmigen Befestigungsabschnitt 22 gesteckt, so dass der Befestigungsabschnitt 22 anschließend die Tellerfeder 1 durchgreift.

Anschließend kann die Welle 23 des Abgasturboladers von der Turbinenseite in die Lagergasse des Lagergehäuses 21 eingeführt und anschließend das Verdichterrad auf der Verdichterseite montiert werden. Nachdem die Montage dieser Rumpfgruppe abgeschlossen ist, wird diese mit der montierten Welle 23 gewuchtet.

Die Figur 6 zeigt eine Weiterbildung des Abgasturboladers 20 der Figur 4, bei welchem die in Figur 4 dargestellte Tellerfeder 1 mit zusätzlichem Hitzeschild 4 zum Einsatz kommt. Die Tellerfeder 1 ist bei diesem Beispiel entlang der axialen Richtung A zwischen dem Lagergehäuse 21 und dem zusätzlichen Hitzeschild 4 angeordnet.

## Patentansprüche

1. Tellerfeder (1) für einen Abgasturbolader (20),
- mit einem sich um eine Mittellängsachse (M) und entlang einer Umfangsrichtung (U) der Tellerfeder (1) erstreckenden und eine Telleröffnung (3) einfassenden ringförmigen Grundkörper (2),
- wobei an einem Innenumfang (5) des Grundkörpers (2) Vorspannelemente (10) zum Ausüben einer Vorspannkraft auf einen in die Telleröffnung (3) eingesteckten Befestigungsabschnitt (22) eines Abgasturboladers (20) ausgebildet sind.

2. Tellerfeder nach Anspruch 1,
**dadurch gekennzeichnet, dass**
wenigstens ein Vorspannelement (10), vorzugsweise alle Vorspannelemente (10), durch einen am Innenumfang (5) des Grundkörpers (2) radial nach innen abstehenden und von der Mittellängsachse (M) weg umgebogenen Fortsatz (9) gebildet ist/sind.

3. Tellerfeder nach Anspruch 1 oder 2,
**dadurch gekennzeichnet, dass**
das wenigstens eine Vorspannelement (10) bzw. der wenigstens eine Fortsatz (9) so ausgebildet bzw. umgebogen ist, dass die von ihm erzeugte Vorspannkraft in einer radialen Richtung (R) der Tellerfeder (1) wirkt, die sich orthogonal von der Mittellängsachse (M) weg erstreckt.

4. Tellerfeder nach einem der Ansprüche 1 bis 3,
**dadurch gekennzeichnet, dass**
in einem Querschnitt senkrecht zur Mittellängsachse (M), vorzugsweise auch in einer Draufsicht auf den Grundkörper (2) entlang der Mittellängsachse (M), an dem Innenumfang (5) entlang der Umfangsrichtung (U) wenigstens zwei, vorzugsweise mehrere, Vorspannelemente (10) bzw. Fortsätze (9) im Abstand zueinander angeordnet sind.

5. Tellerfeder nach einem der vorhergehenden Ansprüche,
**dadurch gekennzeichnet, dass**
in dem Querschnitt senkrecht zur Mittellängsachse (M) zwischen jeweils zwei in Umfangsrichtung (U) benachbarten Vorspannelementen (10) bzw. Fortsätzen (9) eine Ausnehmung (6) gebildet ist.

6. Tellerfeder nach Anspruch 5,
**dadurch gekennzeichnet, dass**
wenigstens eine Ausnehmung (9) als sich entlang der radialen Richtung (R) der Tellerfeder (1) erstreckender schlitzartiger Durchbruch ausgebildet ist.

7. Tellerfeder nach einem der Ansprüche 2 bis 6,
**dadurch gekennzeichnet, dass**
in dem Längsschnitt entlang der Mittellängsachse (M) ein radial innerer Endabschnitt (8) wenigstens eines Fortsatzes (9) sich parallel zur Mittellängsachse (M) erstreckt.

8. Tellerfeder nach einem der vorhergehenden Ansprüche,
**dadurch gekennzeichnet, dass**
der Grundkörper (2) als Blechformteil (11) mit einer vorbestimmten Blechstärke (B) ausgebildet ist.

9. Tellerfeder nach Anspruch 8,
**dadurch gekennzeichnet, dass**
eine axial gemessene Abschnittslänge (I) des sich parallel zur Mittellängsachse erstreckenden radial inneren Endabschnitts (8) wenigstens zwei, vorzugsweise wenigstens drei und höchstens zehn, höchst vorzugsweise höchstens fünf Blechstärken (B) beträgt.

10. Tellerfeder nach einem der Ansprüche 7 bis 9,
**dadurch gekennzeichnet, dass**
in dem Längsschnitt entlang der Mittellängsachse (M) der radial innere Endabschnitt (8) - zur Ausbildung einer Anlagefläche für den Abgasturbolader (20) - radial nach außen in einen Anlageabschnitt (12) übergeht, der sich senkrecht zur Mittellängsachse (M) erstreckt.

11. Tellerfeder nach einem der vorhergehenden Ansprüche,
**dadurch gekennzeichnet, dass**
die Vorspannelemente (10) bzw. die Fortsätze (9) integral am Grundkörper (2) ausgeformt sind.

12. Tellerfeder nach einem der vorhergehenden Ansprüche,
**dadurch gekennzeichnet, dass**
der Grundkörper (2) ohne Vorspannelemente (10) rotationssymmetrisch zur Mittellängsachse (M) ausgebildet ist.

13. Abgasturbolader,
- mit einer Turbine, die ein Turbinengehäuse und ein im Turbinengehäuse (6) aufgenommenes Turbinenrad (4) aufweist,
- mit einer Tellerfeder (1) nach einem der vorhergehenden Ansprüche,
- mit einem Lagergehäuse (21), welches einen Befestigungsabschnitt aufweist, welcher die Telleröffnung (3) der Tellerfeder (1) durchgreift, so dass die Tellerfeder (1) zur Ausbildung eines Hitzeschildes, welches im Betrieb des Abgasturboladers das Lagergehäuse gegen von der Turbine erzeugte Wärme abschirmt, am Lagergehäuse (2) fixiert ist.

14. Abgasturbolader nach Anspruch 13,
**dadurch gekennzeichnet, dass**
die am Grundkörper (2) ausgeformten Vorspannelemente auf den Befestigungsabschnitt (22) des Lagergehäuses (21) eine Vorspannkraft ausüben.

15. Abgasturbolader nach Anspruch 13 oder 14,
**dadurch gekennzeichnet, dass**
die von den Vorspannelementen erzeugte und auf den Befestigungsabschnitt (22) des Lagergehäuses (21) ausgeübte Vorspannkraft im Wesentlichen in radialer Richtung der Tellerfeder wirkt.

16. Abgasturbolader nach einem der Ansprüche 13 bis 15,
**dadurch gekennzeichnet, dass**
die Vorspannelemente flächig am Befestigungsabschnitt (22) des Lagergehäuses (21) anliegen.

17. Abgasturbolader nach einem der Ansprüche 13 bis 16,
**dadurch gekennzeichnet, dass**
die Tellerfeder mit einem radial äußeren Endabschnitt (13) des Grundkörpers (2) axial an einem Leitschaufelträger (24) des Abgasturboladers (20) anliegt, so dass die Tellerfeder (1) den Leitschaufelträger (24) axial zum Turbinengehäuse vorspannt.
